# EUROPEAN PATENT APPLICATION

(11) **EP 2 001 249 A1**
(43) Date of publication of application: **10.12.2008**
(21) Application number: 07738679.5
(22) Date of filing: 15.03.2007
(51) Int. Cl.: H04Q 7/36, H04B 7/26

(54) **BASE STATION APPARATUS AND CHANNEL ALLOCATION METHOD**

(30) Priority: 27.03.2006 JP 2006085077
(71) Applicant: Kyocera Corporation, Kyoto-shi, Kyoto-fu 612-8501 (JP)
(72) Inventor: YAMAZAKI, Chiharu, Yokohama-shi, Kanagawa; 224-8502 (JP); KIMURA, Shigeru, Yokohama-shi, Kanagawa; 224-8502 (JP)
(74) Representative: Walaski, Jan Filip
(86) International application number: PCT/JP2007/055229
(87) International publication number: WO 2007/111145

(57) **Abstract**

Upon receipt of a new channel allocation request from a mobile communication terminal, a suitable channel is allocated. A base station device performs communication with communication terminals by implementing an adaptive process using a plurality of antennas, and includes an interference recognizing unit that recognizes a level of interference on empty channels for use in the communication, a channel selector that selects an empty channel to be allocated based on a result recognized by the interference recognizing unit, and a channel allocator that, when there is a new channel allocation request from a communication terminal, allocates the empty channel selected by the channel selector to that communication terminal.

## Description

### TECHNICAL FIELD

The present invention relates to a base station device and a channel allocation method that allocate a suitable channel when there is a new channel allocation request from a mobile communication terminal.
Priority is claimed on Japanese Patent Application No. 2006-85077, filed March 27, 2006, the content of which is incorporated herein by reference.

### BACKGROUND ART

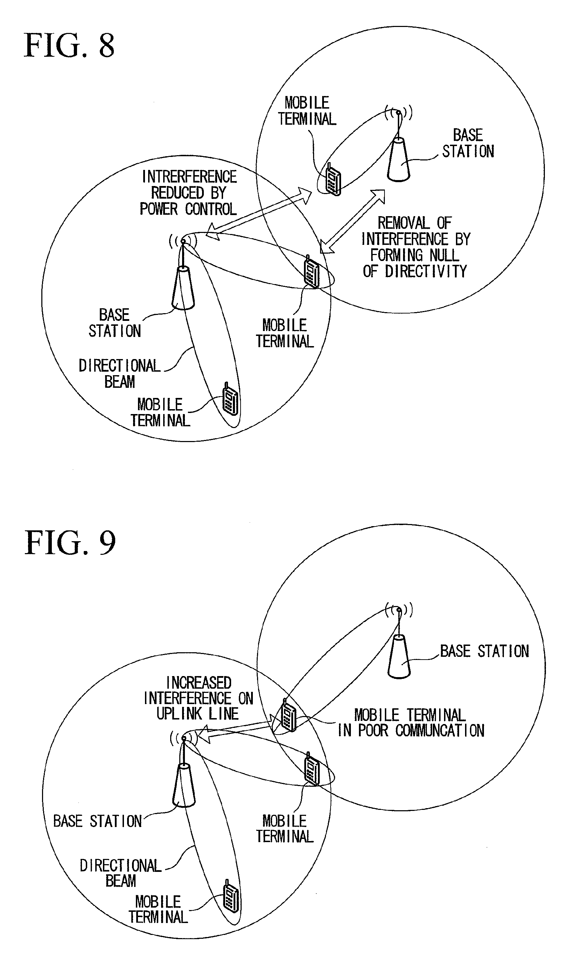

FIG. 8 is the operation of a conventional base station device. In wireless communication, when using same channels such as frequency and orthogonal codes between adjacent cells, the communication signal of the adjacent cell become interference signals at the self cell. When using a same channel as the interference signal at the self cell, it becomes possible to minimally suppress the effect of interference between the adjacent cells by controlling power. There is also a communication technique of dividing a signal according to directivity control of an adaptive array at a base station, and detecting only a desired signal.

Known in the prior art is a base station device which, to increase the probability of accepting a channel allocation request from a terminal device, measures the strengths of a plurality of received request signals, and selects a terminal device for allocating a channel based on the strengths of the plurality of request signals that were measured. This is disclosed in, for example, Patent Literature 1.
(Patent Literature 1) Japanese Unexamined Patent Application, First Publication, No. 2005-176145.

### DISCLOSURE OF THE INVENTION

### PROBLEMS TO BE SOLVED BY THE INVENTION

FIG. 9 is an explanatory diagram of an operation of a conventional base station device. As shown in FIG. 9, in a condition where the transmission power must be increased in order to enhance the communication rate at an adjacent cell in a variable modulation scheme system, or to maintain communication quality with a terminal having poor communication status, the interference power to the self cell sometimes increases. In such a case, if communication is performed using the same channel as the interference from the adjacent cell, the communication capacity in the uplink and downlink will be reduced by the effects of the interference.
FIG. 9 is an explanatory diagram of the operation of a base station device according to conventional technology. As shown in FIG. 9, if the mobile communication terminal is moving at high speed, directivity control of the adaptive array may be inadequate. In such cases, communication capacity is similarly reduced by the effects of interference. Moreover, irrespective of interference from the adjacent cell, a similar problem arises when interference is received from another device.
However, when the conventional base station device receives a new channel allocation request from a mobile communication terminal, it allocates an empty channel without considering effects of interference, leading to a problem that limited channel resources cannot be effectively utilized.

The present invention has been realized in view of the above, and aims to provide a base station device and a channel allocation method that, when there is a new channel allocation request from a mobile communication terminal, can avoid allocation of a channel on which interference cannot be entirely suppressed even by performing an adaptive array process, and can allocate a suitable channel.

### MEANS FOR SOLVING THE PROBLEMS

According to a first aspect of the invention, a base station device performs communication with communication terminals by implementing an adaptive process using a plurality of antennas, and can include an interference recognizing unit that recognizes a level of interference on empty channels for use in the communication, a channel selector that selects an empty channel to be allocated based on a result recognized by the interference recognizing unit, and a channel allocator that, when there is a new channel allocation request from a communication terminal, allocates the empty channel selected by the channel selector to that communication terminal.

The interference recognizing unit can recognize the validity of the adaptive process based on the power of the interference on the empty channel.

The interference recognizing unit can recognize the level of interference based on an amount of variation in the interference power on the empty channel during a predetermined period.

The interference recognizing unit can recognize the level of interference based on a phase rotation amount of a received signal on the empty channel.

The interference recognizing unit can recognize the level of interference after the adaptive process is implemented on the empty channel.

According to a second aspect of the invention, a channel allocation method in a base station device that performs communication with communication terminals by implementing an adaptive process using a plurality of antennas, can, when there is a new channel allocation request from a mobile communication terminal, include recognizing a level of interference on empty channels for use in the communication, selecting an empty channel to be allocated based on the validity of the adaptive process recognized by recognizing the level of interference, and allocating the selected empty channel to the mobile communication terminal. EFFECTS

According to the invention, when there is a new channel allocation request from a communication terminal, a channel having few effects of interference, or a channel on which effects of interference can be suppressed by an adaptive array process, is selected by priority ranking from empty channels and allocated to the mobile communication terminal, making it possible to avoid allocation of a channel on which interference cannot be entirely suppressed even by performing an adaptive array process, thereby allocating a suitable channel, and obtaining a maximum communication capacity from limited channel resources.

### BRIEF DESCRIPTION OF THE DRAWINGS

FIG. 1 is a block diagram of the configuration of a base station device according to a first embodiment of the invention.
FIG. 2 is a block diagram of the configuration of a base station device according to a second embodiment of the invention.
FIG. 3 is a block diagram of the configuration of a base station device according to a third embodiment of the invention.
FIG. 4 is an explanatory diagram of an operation of a base station device according to a fourth embodiment of the invention.
FIG. 5A is an explanatory diagram of the relationship between a received slot period and a weight calculation period, when interference occurs at a weight-calculation time.
FIG. 5B is an explanatory diagram of the relationship between a received slot period and a weight calculation period, when interference does not occur at a weight-calculation time.
FIG. 6 is a block diagram of the configuration of a base station device according to a fifth embodiment of the invention.
FIG. 7 is a block diagram of the configuration of a base station device according to a sixth embodiment of the invention.
FIG. 8 is an explanatory diagram of an operation of a base station device according to conventional technology.
FIG. 9 is an explanatory diagram of an operation of a base station device according to conventional technology.

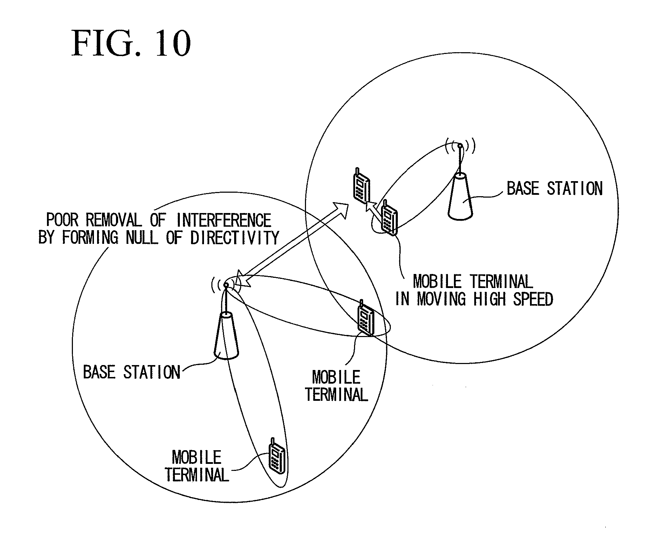

FIG. 10 is an explanatory diagram of an operation of a base station device according to conventional technology.

### REFERENCE NUMERALS

- 1A, 1B, 1C, 1D: Receiving units
- 2: Channel manager
- 3: Power calculator
- 4: Empty channel manager
- 5: Channel allocator
- 6: Transmitting unit
- 7: Power storage unit
- 8: Weight calculator
- 9: Received signal storage unit
- 10: Adaptive processor
- 12: Base station manager
- 13: Known signal recognition unit
- 14: Correlation calculator
- 15: Correlation value storage unit
- 16: Phase rotation speed calculator
- 17: Phase rotation speed comparator
- 181, 182: Adjacent cell base stations

### BEST MODES FOR CARRYING OUT THE INVENTION

### (First Embodiment)

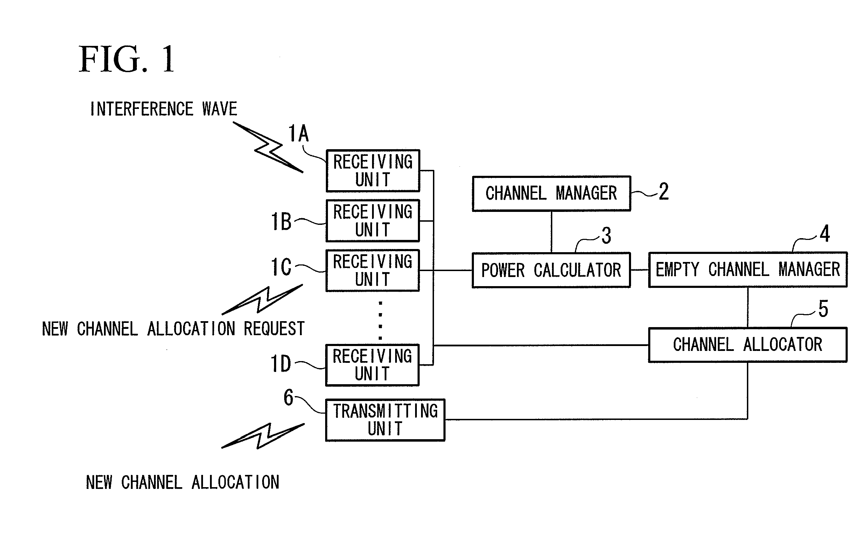

A base station device according to a first embodiment of the invention will be described. FIG. 1 is a block diagram of the configuration of a base station device according to a first embodiment. The base station device includes a plurality of receiving units 1A, 1B, 1C, and 1D, a channel manager 2, a power calculator 3, an empty channel manager 4, a channel allocator 5, and a transmitting unit 6.
The receiving units 1 A, 1B, 1C, and 1D receive a new channel allocation request from an unillustrated mobile communication terminal. The signals that the receiving units 1A, 1B, 1C, and 1D receive contain interference signals that are targets for removal.
The channel manager 2 selects, from among channels that the base station device can use, channels that are presently vacant, and internally holds identification information of the empty channels.
The power calculator 3 calculates the power of the interference received by the receiving units 1A, 1 B, 1C, and 1D for the channels that the channel manager 2 determines as empty channels.

Based on the interference powers of the empty channels calculated by the power calculator 3, the empty channel manager 4 determine a priority ranking of empty channels to be subsequently allocated with respect to a new channel allocation request.
Based on a new channel allocation request received at the receiving units 1A, 1 B, 1C, and 1D, and the priority ranking of empty channels determined by the empty channel manager 4, the channel allocator 5 determines a channel for allocation with respect to the new channel allocation request.
The transmitting unit 6 transmits the channel identification information, determined by the channel allocator 5, to the mobile communication terminal that transmitted the new channel allocation request.

Subsequently, an operation of the base station device shown in FIG. 1 will be described.
Firstly, the channel manager 2 selects, from among channels that it can use itself, channels that are presently vacant, and updates identification information of those empty channels. Based on the empty channel identification information held by the channel manager 2, the power calculator 3 calculates the interference powers received at the receiving units 1A to 1D. The empty channel manager 4 recognizes the level of interference based on the interference power values of the empty channels calculated by the power calculator 3, determines an empty channel priority ranking that starts with the smallest interference power, and internally holds this priority ranking in correlation with the channel identification information.

When a new channel allocation request is received at the receiving units 1A to 1D, the channel allocator 5 determines, based on the priority ranking of empty channels that the empty channel manager 4 is internally holding, an empty channel having the highest priority ranking (the smallest interference power value). The channel allocator 5 then reports the identification information of the selected empty channel to the transmitting unit 6. Upon receiving this empty channel identification information, the transmitting unit 6 transmits it to the mobile communication terminal that transmitted the new channel allocation request.
Thus, by selecting an empty channel with lower interference power according to priority ranking at the empty channel manager 4, superior communication with low interference in the self cell becomes possible, and in addition, effect of interference on adjacent cells can be reduced.

### (Second Embodiment)

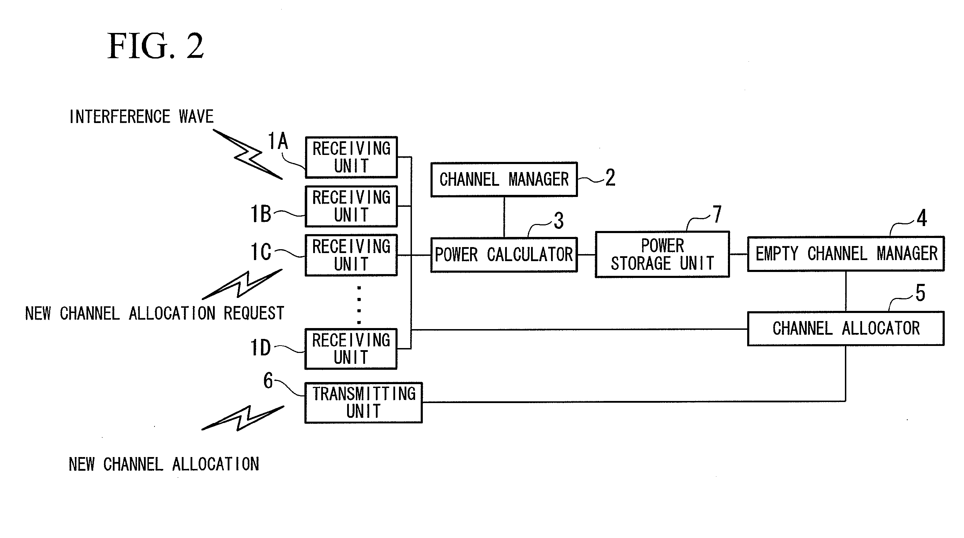

Subsequently, a base station device according to a second embodiment of the invention will be described. FIG. 2 is a block diagram of the configuration of a base station device according to a second embodiment. In FIG. 2, the base station device includes a plurality of receiving units 1 A, 1B, 1C, and 1D, a channel manager 2, a power calculator 3, an empty channel manager 4, a channel allocator 5, a transmitting unit 6, and a power storage unit 7.
The receiving units 1 A, 1B, 1C, and 1D receive a new channel allocation request from an unillustrated mobile communication terminal. The signals that the receiving units 1A, 1B, 1C, and 1D receive contain interference signals that are targets for removal.
The channel manager 2 selects, from among channels that the base station device can use, channels that are presently vacant, and internally holds and manages identification information of the empty channels.
The power calculator 3 calculates the interference power received by the receiving units 1 A to 1D for the channels that the channel manager 2 determines as empty channels.

Based on the interference powers of the empty channels calculated by the power calculator 3, the empty channel manager 4 determine a priority ranking of empty channels to be subsequently allocated with respect to a new channel allocation request.
Based on a new channel allocation request received at the receiving units 1A to 1D and the priority ranking of empty channels determined by the empty channel manager 4, the channel allocator 5 determines a channel for allocation with respect to the new channel allocation request.
The transmitting unit 6 transmits the channel identification information, determined by the channel allocator 5, to the mobile communication terminal that transmitted the new channel allocation request.
The power storage unit 7 stores the power of the interference calculated by the power calculator 3 only for a nearest arbitrary period.

The base station device of FIG. 2 differs from the base station device of FIG. 1 in respect of the following points. The newly-provided power storage unit 7 stores the power of the interference calculated by the power calculator 3 only for a nearest arbitrary period. Based on the amount of variation in the interference power of the empty channel stored in the power storage unit 7, the empty channel manager 4 determines a priority ranking of empty channels to be subsequently allocated.

Subsequently, an operation of the base station device in FIG. 2 will be described.
Firstly, the channel manager 2 selects, from among channels that it can use itself, channels that are presently vacant, and updates identification information of those empty channels. Then, based on the empty channel identification information held by the channel manager 2, the power calculator 3 calculates the interference powers received at the receiving units 1A to 1D, and stores the calculated power values in the power storage unit 7. The empty channel manager 4 recognizes the level of interference based on the amount of variation in the calculated interference power values of the empty channels stored in the power storage unit 7, determines an empty channel priority ranking that starts with the smallest interference power, and internally holds this priority ranking in correlation with the channel identification information.

When a new channel allocation request is received at the receiving units 1A to 1D, the channel allocator 5 determines, based on the priority ranking of empty channels that the empty channel manager 4 is internally holding, an empty channel having the highest priority ranking. The channel allocator 5 then reports the identification information of the selected empty channel to the transmitting unit 6. Upon receiving this empty channel identification information, the transmitting unit 6 transmits it to the mobile communication terminal that transmitted the new channel allocation request.

In cases such as when the interference source (e.g. a mobile communication terminal in an adjacent cell) is moving, the power of the interference received by the base station device fluctuates. The speed of this variation varies according to the moving speed of the interference source and its propagation environment, and the angle spread of the waves arriving at the base station device. When this variation is rapid, it may be difficult to suppress interference even by implementing an adaptive process at the base station device; also, when transmitting from the base station device, since it is not possible to perform a process of directing a null toward the interference source, interference may conversely be increased. However, since the empty channel manager 4 selects an empty channel having low amplitude and variation of interference power according to priority ranking, it becomes possible to select, according to priority ranking, an empty channel at a frequency where interference can be suppressed by adaptive processing at the base station device, achieving superior communication with low interference within the self cell and reducing the effect of interference to the adjacent cell.

### (Third Embodiment)

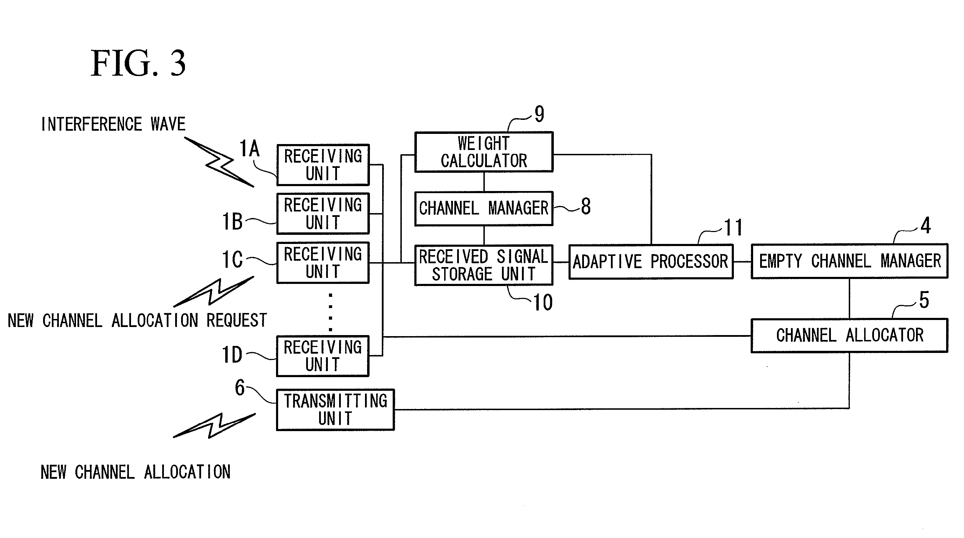

Subsequently, a base station device according to a third embodiment of the invention will be described with reference to the drawings. FIG. 3 is a block diagram of the configuration of a base station device according to a third embodiment. This base station device includes a plurality of receiving units 1A, 1B, 1C, and 1D, a channel manager 2, an empty channel manager 4, a channel allocator 5, a transmitting unit 6, a weight calculator 8, a received signal storage unit 9, and an adaptive processor 10.
The receiving units 1A, 1 B, 1C, and 1D receive a new channel allocation request from an unillustrated mobile communication terminal. The signals that the receiving units receive contain interference signals that are targets for removal.
The channel manager 2 selects, from among channels that the base station device can use, channels that are presently vacant, and internally holds and manages identification information of the empty channels.
For a channel that the channel manager 2 determines to be vacant, the weight calculator 8 calculates a weight that directs a null toward the interference received at the receiving units 1A to 1D.
For a channel that the channel manager 2 determines to be vacant, the received signal storage unit 9 stores an interference signal received at the receiving units 1A to 1D only for a nearest arbitrary period.

The adaptive processor 10 applies a weight calculated in the weight calculator 8 to a received signal stored in the received signal storage unit 9.
Based on the received signal subjected to the adaptive process calculated by the adaptive processor 10, the empty channel manager 4 determines, according to propriety ranking, an empty channel for allocation with respect to a new channel allocation request.
Based on a new channel allocation request received at the receiving units 1A to 1D and the priority ranking of empty channels determined by the empty channel manager 4, the channel allocator 5 determines a channel for allocation with respect to the new channel allocation request.
The transmitting unit 6 transmits the channel identification information, determined by the channel allocator 5, to the mobile communication terminal that transmitted the new channel allocation request.

Subsequently, an operation of the base station device shown in FIG. 3 will be described.
Firstly, the channel manager 2 selects, from among channels that it can use itself, channels that are presently vacant, and updates identification information of those empty channels.
The weight calculator 8 calculates a weight that directs a null toward the interference received at the receiving units 1A to 1D for the empty channels selected by the channel manager 2. In conjunction with this, for the channels that the channel manager 2 determines to be vacant, the received signal storage unit 9 stores an interference signal received at the receiving units 1A to 1D only for a nearest arbitrary period.
The adaptive processor 10 applies the weight calculated by the weight calculator 8 to the received signals stored in the received signal storage unit 9.
Upon receiving this, the empty channel manager 4 recognizes the level of interference based on the received signals subjected to the adaptive process of applying the weight calculated by the weight calculator 8, determines an empty channel priority ranking that starts with the smallest interference power, and internally holds this priority ranking in correlation with the channel identification information.

When a new channel allocation request is received at the receiving units 1A to 1D, the channel allocator 5 determines, based on the priority ranking of empty channels that the empty channel manager 4 is internally holding, an empty channel having the highest priority ranking. The channel allocator 5 reports the identification information of the selected empty channel to the transmitting unit 6. Upon receiving this empty channel identification information, the transmitting unit 6 transmits it to the mobile communication terminal that transmitted the new channel allocation request.

Thus, by applying a weight calculated within an arbitrary period to a received signal that is stored after an arbitrary period of time elapses from the time of calculating the weight, it is possible to determine whether the weight calculation at the actual communication time can reflect changes in the wave propagation environment between the base station device and the mobile communication terminal. Since the empty channel manager 4 selects, according to priority ranking, an empty channel having a small interference power after performing the adaptive process, when a channel is actually allocated to the self cell, the adaptive process of the base station device directs a null toward the interference, thereby ensuring that superior communication can be achieved with low interference, while also reducing effects of the interference to adjacent cells.

### (Fourth Embodiment)

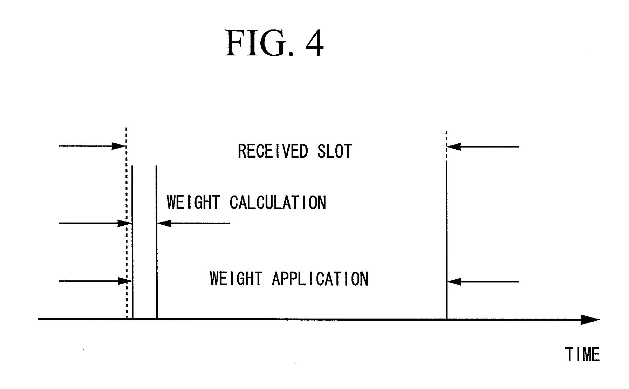

Subsequently, an operation of the base station device shown in FIG. 3 according to a fourth embodiment of the invention will be described using the drawings. The fourth embodiment applies the base station device shown in FIG. 3 in a TDD/FDMA system. FIG. 4 is an explanatory diagram of the operation of the base station device shown in FIG. 3 according to the fourth embodiment of the invention. When the base station device of FIG. 3 is applied in a TDD/FDMA system, the received signal storage unit 9 stores an interference signal in a received slot received by the receiving units 1A to 1D for each channel determined as vacant by the channel manager 2. The weight calculator 8 calculates a weight for suppressing the signal during an arbitrary period from the head of the signals stored in the received signal storage unit 9. For each empty channel, the adaptive processor 10 applies the calculated weight to the received signal stored in the received signal storage unit 9 (see FIG. 4). In addition, for the received signals subjected to the adaptive process, the empty channel manager 4 stores a maximum value in each channel for an arbitrary number of times, and, based on the maximum value in each of the empty channels, the empty channel manager 4 determines a priority ranking of empty channels to be subsequently allocated.

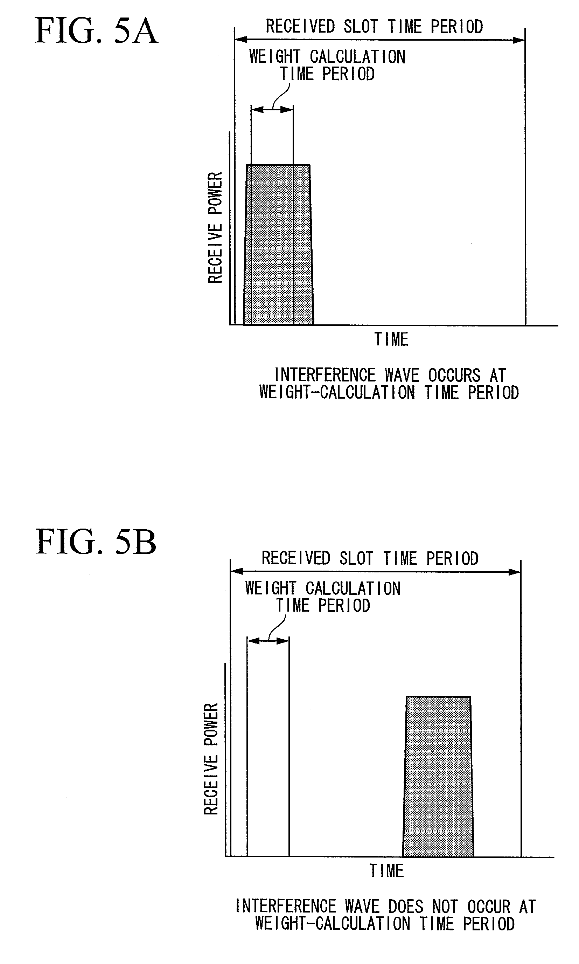

FIG. 5A is an explanatory diagram of the relationship between a received slot period and a weight calculation period, when interference occurs at a weight-calculation time. FIG. 5B is an explanatory diagram of the relationship between a received slot period and a weight calculation period, when interference does not occur at a weight-calculation time. On one frequency channel, when a weight for suppressing interference calculated at the head of the received slot is valid until the end of the received slot, reception is possible while suppressing the interference on that frequency channel by adaptive processing; also, even if the weight generated at the time of reception is applied to the transmitted slot, no influence affects the source of the interference (e.g. a mobile communication terminal in an adjacent cell). Irrespective of whether it is being constantly generated during the received slot period, there is a possibility that the interference signal will be generated in bursts as shown in FIGS. 5A and 5B. When a burst is generated during the weight-calculation period as shown in FIG 5A, unless the interference source moves, the weight calculated here will be valid in the slot, and will suppress interference in the slot. Therefore, even if this channel is allocated to the mobile communication terminal that transmitted the new channel allocation request, it will be possible to suppress the effects of interference.

On the other hand, when the interference signal is not generated in a burst during the weight-calculation period as shown in FIG. 5B, the weight calculated here will not suppress the burst interference and a large interference will be measured in the slot; consequently, if this channel is allocated to the mobile communication terminal that transmitted new channel allocation request, it will not be possible to suppress the effects of interference.

It is possible that both the conditions shown in FIGS. 5A and 5B will arise when the interference source is asynchronous with the communication of the base station device. When storing the maximum value in the adaptive processor 10, a frequency channel exhibiting the condition shown in FIG 5B can be detected by storing maximum values for a plurality of frames, thereby avoiding allocation of this frequency channel.

### (Fifth Embodiment)

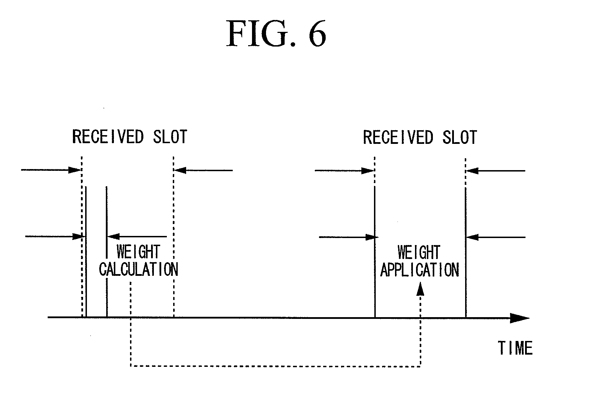

Subsequently, a base station device according to a fifth embodiment of the invention will be described with reference to the drawings. The fifth embodiment applies the base station device shown in FIG. 3 in a TDD/FDMA system. FIG. 6 is an explanatory diagram of an operation of the base station device shown in FIG. 3 according to a fifth embodiment of the invention. The operation of the base station device in the fifth embodiment differs from that of the base station device in the fourth embodiment in regard to the following point. For each channel determined as vacant by the channel manager 2, the adaptive processor 10 applies a weight calculated by the weight calculator 8 to a received signal in a subsequent received slot, from among the received signals stored in the received signal storage unit 9 (see FIG. 6).

Thus, on one frequency channel, when a weight for suppressing interference calculated at the head of the received slot is valid until the subsequent received slot, reception is possible while suppressing the interference on that frequency channel by adaptive processing; in addition, in comparison with the method shown in FIG. 4, it is possible to further suppress interference applied to the interference source (e.g. a mobile communication terminal in an adjacent cell) when the weight generated at the time of reception is applied to the transmitted slot.

### (Sixth Embodiment)

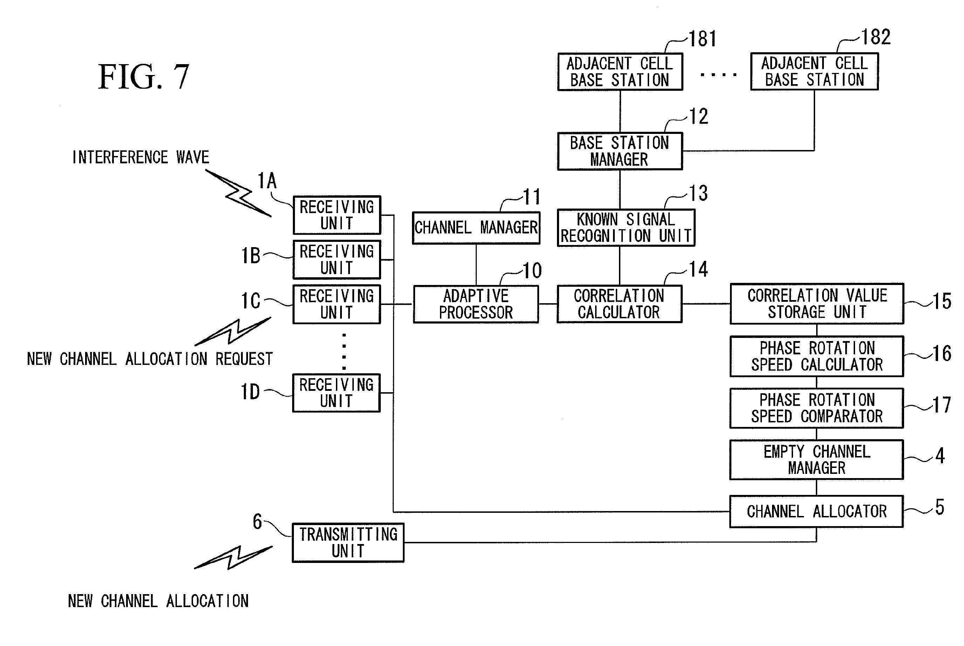

Subsequently, a base station device according to a sixth embodiment of the invention will be described with reference to the drawings. FIG. 7 is a block diagram of the configuration of a base station device according to a sixth embodiment. This base station device includes a plurality of receiving units 1A, 1B, 1C, and 1D, a channel manager 2, an empty channel manager 4, a channel allocator 5, a transmitting unit 6, a received signal storage unit 9, a base station manager 12, a known signal recognition unit 13, a correlation calculator 14, a correlation value storage unit 15, a phase rotation speed calculator 16, and a phase rotation speed comparator 17.
The receiving units 1A, 1B, 1C, and 1D receive a new channel allocation request from an unillustrated mobile communication terminal. The signals that the receiving units 1A, 1B, 1C, and 1D receive contain interference signals that are targets for removal.
The channel manager 2 selects, from among channels that the base station device can use, channels that are presently vacant, and internally holds and manages identification information of the empty channels.
For a channel that the channel manager 2 determines to be vacant, the received signal storage unit 9 stores an interference signal received at the receiving units 1A to 1D only for a nearest arbitrary period.

The base station manager 12 manages a channel used by base station devices 181 and 182 in adjacent cells, and internally holds identification information of the channel.
The known signal recognition unit 13 recognizes known signals used on a channel that the base station manager 12 determines is being used in base station devices in adjacent cells
From among the received signals stored by the received signal storage unit 9, and the known signals recognized by the known signal recognition unit 13, the correlation calculator 14 calculates a correlation with a known signal that is being used on a same channel as one that is vacant at the channel manager 2.

The correlation value storage unit 15 stores a plurality of correlation values calculated by the correlation calculator 14.
The phase rotation speed calculator 16 calculates the rotation speed of the phase based on the correlation values stored in the correlation value storage unit 15.
The phase rotation speed comparator 17 compares the phase rotation speeds on the channels calculated by the phase rotation speed calculator 16.
The empty channel manager 4 recognizes the level of interference based on the phase rotation speeds compared by the phase rotation speed comparator 17, and determines a priority ranking of empty channels for allocation with respect to a new channel allocation request.
Based on a new channel allocation request received at the receiving units 1A to 1D, and the priority ranking of empty channels determined by the empty channel manager 4, the channel allocator 5 determines a channel for allocation with respect to the new channel allocation request.
The transmitting unit 6 transmits the channel identification information, determined by the channel allocator 5, to the mobile communication terminal that transmitted the new channel allocation request.

Subsequently, an operation of the base station device shown in FIG. 7 will be described.
Firstly, the channel manager 2 selects, from among channels that it can use itself, channels that are presently vacant, and updates identification information of those empty channels. Meanwhile, the known signal recognition unit 13 obtains information relating to known signals used on a channel that the base station manager 12 determines is being used at the base station device of an adjacent cell. In conjunction with this, for the channels that the channel manager 2 determines to be vacant, the received signal storage unit 9 stores an interference signal received at the receiving units 1A to 1D only for a nearest arbitrary period.

The correlation calculator 14 calculates a correlation between the received signal stored in the received signal storage unit 9, and a known signal, among the known signals stored by the known signal recognition unit 13, that is being used on the same channel as a channel that is vacant at the channel manager 2, and stores the calculated correlation value in the correlation value storage unit 15. Upon receiving this, the phase rotation speed calculator 16 calculates the rotation speed of the phase from the correlation value stored in the correlation value storage unit 15, and the phase rotation speed comparator 17 compares the phase rotation speeds on the empty channels calculated by the phase rotation speed calculator 16. The empty channel manager 4 recognizes the level of interference based on the phase rotation speeds compared by the phase rotation speed comparator 17, determines a priority ranking of empty channels for subsequent allocation with respect to a new channel allocation request, and internally holds this priority ranking and the channel identification information.

When a new channel allocation request is received at the receiving units 1A to 1D, the channel allocator 5 selects, based on the priority ranking of empty channels that the empty channel manager 4 is internally holding, an empty channel having the highest priority ranking. The channel allocator 5 reports the identification information of the selected empty channel to the transmitting unit 6. Upon receiving this empty channel identification information, the transmitting unit 6 transmits it to the mobile communication terminal that transmitted the new channel allocation request.

The source of interference having a rapid phase rotation speed can be regarded as having a rapidly changing propagation environment between itself and the base station device, e.g. when the mobile communication terminal is moving at high speed. Using an adaptive array, it is difficult to remove interference from a source that has a rapidly changing propagation environment. However, since the empty channel manager 4 uses priority ranking to select a channel having a slow phase rotation speed, when a channel is actually allocated to the self cell, an adaptive process of directing a null toward the interference will achieve superior communication with low interference, and can reduce the effects of interference on an adjacent cell.

As described above, since a base station device, which includes a plurality of antennas and can perform an adaptive process for at least one of transmission and reception, measures the power of signals received on empty channels that are not yet allocated to a mobile communication terminal, and, when a mobile communication terminal makes a new channel allocation request, selects a channel for allocation to the mobile communication terminal based on the power measured on each empty channel, this ensures that a suitable channel is allocated, by avoiding allocation of a channel having an interference wave that cannot be completely suppressed by adaptive array processing.

Furthermore, since the power value of the received signal is stored at the base station device only for a nearest arbitrary period, and a channel for allocation is selected based on time variation of the stores received signal, a suitable channel can be selected.

Furthermore, since the channel for allocation is selected based on a receive power that is processed using an adaptive array, a suitable channel can be selected.

Furthermore, since the phase rotation speeds of received signals on empty channels that are not yet allocated with respect to the mobile communication terminal is detected, and, when a mobile communication terminal makes a new channel allocation request, a channel for allocation to the mobile communication terminal is selected based on the detected phase rotation speeds of the empty channels, a suitable channel can be selected.

A program for realizing functions of the processors in FIGS. 1, 2, 3, and 7 can be stored on a computer-readable recording medium, and a channel allocation process can then be performed by making a computer system read and execute the program stored on this recording medium. Here, 'computer system' includes hardware such as peripheral devices and an OS. Also, 'computer-readable recording medium' includes portable media such as a flexible disk, an optical-magnetic disk, a ROM, and a CD-ROM, and storage devices such as a hard disk that is incorporated in the computer system. 'Computer-readable recording medium' also includes media that store a program for a fixed period, such as a volatile memory (RAM) in a computer system that functions as a server or client when the program is transmitted via a communication line such as a telephone line, a network such as the internet, etc.

The program can be transmitted from the computer system that stores it in a storage device and the like, via a transmission medium, or by transmission waves in a transmission medium, to another computer system. Here, the 'transmission medium' that transmits the program is one that has a function of transmitting information in the manner of a communication line such as a telephone line, a network (communication network) such as the internet, etc. The program can realize all or some of the functions mentioned above. Moreover, the program can be what is known as a differential file (differential program), whose functions are realized in combination with programs already stored in the computer system.

### INDUSTRIAL APPLICABILITY

The present invention is effective in a base station device that allocates a suitable channel when there is a new channel allocation request from a mobile communication terminal.
Moreover, the invention is effective in a channel allocation method of allocating a suitable channel when there is a new channel allocation request from a mobile communication terminal.

## Claims

1. A base station device that performs communication with communication terminals by implementing an adaptive process using a plurality of antennas, the base station device comprising:
an interference recognizing unit that recognizes a level of interference on empty channels for use in the communication;
a channel selector that selects an empty channel to be allocated based on a result recognized by the interference recognizing unit; and
a channel allocator that allocates the empty channel selected by the channel selector to a communication terminal, in accordance with a new channel allocation request from the communication terminal.

2. The base station device according to claim 1, wherein the interference recognizing unit recognizes the validity of the adaptive process based on the power of the interference wave on the empty channel.

3. The base station device according to claim 1, wherein the interference recognizing unit makes the recognition based on an amount of variation in the interference power on the empty channel during a predetermined period.

4. The base station device according to claim 1, wherein the interference recognizing unit makes the recognition based on an amount of phase rotation of a received signal on the empty channel.

5. The base station device according to claim 1, wherein the interference recognizing unit recognizes the level of interference after the adaptive process is implemented on the empty channel.

6. A channel allocation method in a base station device that performs communication with communication terminals by implementing an adaptive process using a plurality of antennas, the method comprising:
recognizing a level of interference on empty channels for use in the communication, upon receipt of a new channel allocation request from a mobile communication terminal;
selecting an empty channel to be allocated, the selection being made based on the validity of the adaptive process recognized by recognizing the level of interference; and
allocating the selected empty channel to the mobile communication terminal.
